# EUROPEAN PATENT APPLICATION

(11) **EP 4 671 564 A1**
(43) Date of publication of application: **31.12.2025**
(21) Application number: 24184968.6
(22) Date of filing: 27.06.2024
(51) Int. Cl.: F16F 7/10

(54) **A DYNAMIC VIBRATION ABSORBER**

(71) Applicant: VOLVO TRUCK CORPORATION, 405 08 Göteborg (SE)
(72) Inventor: Kim, Hyo sig, High Point, 27265 (US); Gromatzky, Jonathan Alan, Kernersville, 27284 (US); Matthews, Claira, Cranberry Township, 16066 (US); O'Connor, John Nolan, Fanwood, 07023 (US); McClintock, Carson, Markleysburg, 15459 (US); Christman, Lucas, Palmerton, 18071 (US)
(74) Representative: Valea AB

(57) **Abstract**

The present disclosure relates to a dynamic vibration absorber (10) for reducing vibrations of a component (20) installed on a vehicle frame member (110). The dynamic vibration absorber (10) comprises:
- an air tank (30),
- an elastic member (40) comprising a first spring member (40-1), and
- a gripping device (50) attached to the elastic member (40) and configured to grip the air tank (30),
- wherein the gripping device (50) comprises a first gripping member (50-1) having a first gripping space (51-1) to embrace at least a portion (31-1) of the air tank (30), the first gripping member (50-1) being configured such that when the at least portion (31-1) of the air tank (30) is fitted to the first gripping space (51-1), a first gripping force (F1) is applied to the least portion (31-1) of air tank (30)

## Description

### TECHNICAL FIELD

The disclosure relates generally to vibration reduction. In particular aspects, the disclosure relates to a dynamic vibration absorber. The disclosure also relates to a vehicle, and a method for controlling a dynamic vibration absorber. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle vibrations arise from various sources such as engine operation, road irregularities, and mechanical imbalances, causing discomfort and potential damage to the vehicle. To mitigate these vibrations, various solutions have been employed. For instance, a shock absorber may absorb and damp shock impulses by converting kinetic energy of the shock into another form of energy. Moreover, a dynamic damper may be used to reduce the vibration. The dynamic damper may comprise a secondary mass member attached to a primary system via a spring mechanism. When the vehicle experiences these vibrations, the dynamic damper may be tuned to resonate at a frequency that counteracts a frequency of the vibrations, effectively neutralizing the vibrations and resulting in a smoother ride and prolonged vehicle component life.

Even though there are various solutions for reducing the vibrations, there is still a strive to develop improved technology relating to vibration reduction.

### SUMMARY

According to a first aspect of the disclosure, a dynamic vibration absorber for reducing vibrations of a component installed on a vehicle frame member is provided. The dynamic vibration absorber comprises:
- an air tank,
- an elastic member comprising a first spring member, and
- a gripping device attached to the elastic member and configured to grip the air tank,
- wherein the gripping device comprises a first gripping member having a first gripping space to embrace at least a portion of the air tank, the first gripping member being configured such that when the at least portion of the air tank is fitted to the first gripping space, a first gripping force is applied to the least portion of air tank.

Generally, a dynamic vibration absorber may be understood as a mass-spring system, which may be attached to a component and adapted to resonate at a frequency that counteracts a frequency of the vibrations of the component. The first aspect of the disclosure may seek to provide an improved dynamic vibration absorber that may be suitable for reducing vibrations of vehicle components. For instance, it may utilize the vehicle's existing component, e.g., the air tank, to function as a secondary mass member. This may reduce the need for additional components, thereby saving space and weight within the vehicle.

Herein the gripping device may be understood as a member that may securely hold or clamp the air tank without the need for welding or any other permanent attachments. By use of such a gripping device, it may allow for easy assembly and disassembly of the dynamic vibration absorber, facilitating the replacement of the air tank when necessary. Another technical benefit may include easy maintenance of the dynamic vibration absorber.

Optionally in some examples, including in at least one preferred example, the first spring member is an air spring. In general, the stiffness of an air spring may be adjusted by regulating the air pressure inside the air spring. This may allow for precise control over tuning the dynamic vibration absorber to resonate at a frequency that counteracts a frequency of vibrations occurring on a component, for instance, a component installed on a vehicle frame member. A technical benefit may include an enhanced capability which may absorb a wider range of vibration frequencies.

Optionally in some examples, including in at least one preferred example, the first gripping space has a surface that faces the air tank when the at least portion of the air tank is fitted to the first gripping space, and an adhesive is disposed on at least part of the surface. A technical benefit may include that, by use of the adhesive, the air tank may be securely gripped by the gripping device.

Optionally in some examples, including in at least one preferred example, the adhesive is made of polyurethane.

Optionally in some examples, including in at least one preferred example, a housing of the first gripping member is made of a metal material. In general, metals may provide higher strength and rigidity, which may ensure that the housing may withstand the forces applied during operation of the dynamic vibration absorber, without deforming or breaking.

Optionally in some examples, including in at least one preferred example, the air tank comprises a body extending between a first end and a second end along a first direction, wherein the first gripping member is configured to grip at least a portion of the first end of the body of the air tank.

Optionally in some examples, including in at least one preferred example, the elastic member comprises a second spring member, the gripping device comprises a second gripping member attached to the second spring member, the second gripping member having a second gripping space to embrace at least a portion of the second end of the air tank and being configured such that when the at least portion of the second end of the air tank is fitted to the second gripping space, a second gripping force is applied to the at least portion of the second end. A technical benefit may include that, by use of the first and the second spring members, it may provide greater stability as compared to a single-spring setup, which may better resist changes in external forces or disturbances.

Optionally in some examples, including in at least one preferred example, the gripping device is attached to the elastic member using at least a rod member.

According to a second aspect of the disclosure, a vehicle is provided. The vehicle comprises a power pack assembly installed on a vehicle frame member, and the dynamic vibration absorber according to the first aspect of the disclosure. The dynamic vibration absorber is arranged to reduce vibrations of the power pack assembly. Advantages and technical benefits of the second aspect of the disclosure are largely analogous to the advantages and technical benefits of the first aspect of the disclosure.

Optionally in some examples, including in at least one preferred example, the elastic member of the dynamic vibration absorber is attached to the power pack assembly.

Optionally in some examples, including in at least one preferred example, the vehicle further comprises a fluid tank assembly fluidly connectable to the elastic member, and a fluid guiding assembly adapted to assume each one of the following conditions:
- a first condition in which a fluid can flow from the fluid tank assembly to the elastic member, such that a pressure level inside the elastic member is increased,
- a second condition in which a fluid can flow from the elastic member to the fluid tank assembly, such that a pressure level inside the elastic member is decreased, and
- a third condition in which the fluid tank assembly is fluidly disconnected from the elastic member.

A technical benefit may include precise control of pressure inside the elastic member. As a result, the dynamic vibration absorber may be tuned to resonate at a frequency that counteracts a frequency of vibrations occur on the power pack assembly.

Optionally in some examples, including in at least one preferred example, the vehicle comprises a control unit adapted to receive information indicative of at least one of the following:
- a vibration level of the component installed on a vehicle frame member, or a load of a vehicle.
- wherein the control unit is configured to control operations of the fluid guiding assembly based on the received information.

Herein the information may be obtained from vehicle on-board sensors, such as an acceleration sensor or a load sensor. By use of these information to control the fluid guiding assembly for regulating the pressure level inside the elastic member, a technical benefit may include automatic adjustment of dynamic vibration absorber, which may adapt in real-time to varying driving conditions and loads, ensuring optimal performance and safety under diverse operational scenarios.

Optionally in some examples, including in at least one preferred example, the fluid tank assembly comprises a first tank, preferably a high-pressure tank, and the fluid guiding assembly comprises a first fluid controller for controlling a fluid connection between the first tank and the elastic member. The first tank is configured for supplying a fluid to the elastic member when the fluid connection between the first tank and the elastic member is enabled.

Optionally in some examples, including in at least one preferred example, the fluid tank assembly further comprises an auxiliary tank fluidly connectable to the elastic member, and the fluid guiding assembly further comprises a second fluid controller for controlling a fluid connection between the auxiliary tank and the elastic member. The auxiliary tank is configured for receiving the fluid from the elastic member when the fluid connection between the auxiliary tank and the elastic member is enabled.

According to a third aspect of the disclosure, a computer-implemented method for controlling a dynamic vibration absorber for reducing vibrations of a component installed on a vehicle frame member is provided. The dynamic vibration absorber comprises:
- an air tank,
- an elastic member comprising a first spring member being an air spring, and
- a gripping device attached to the elastic member and configured to grip the air tank,
- wherein the gripping device comprises a first gripping member having a first gripping space to embrace at least a portion of the air tank, the first gripping member being configured such that when the at least portion of the air tank is fitted to the first gripping space, a first gripping force is applied to the least portion of air tank,

The dynamic vibration absorber is provided with:
- a fluid tank assembly fluidly connectable to the elastic member, and
- a fluid guiding assembly adapted to assume each one of the following conditions:
- a first condition in which a fluid can flow from the fluid tank assembly to the elastic member, such that a pressure level inside the elastic member is increased,
- a second condition in which a fluid can flow from the elastic member to the fluid tank assembly, such that a pressure level inside the elastic member is decreased, and
- a third condition in which the fluid tank assembly is fluidly disconnected to the elastic member.

The method comprises:
- receiving, by processing circuitry of a computer system, information indicative of at least one of the following: a vibration level of the component installed on a vehicle frame member, or a load of the vehicle, and
- controlling, by the processing circuitry, operations of the fluid guiding assembly based on the received information.

A technical benefit may include automatic adjustment of the dynamic vibration absorber, which may adapt in real-time to varying driving conditions and loads, ensuring optimal performance and safety under diverse operational scenarios.

Optionally in some examples, including in at least one preferred example, the method further comprises:
- controlling, by the processing circuitry, operations of the fluid guiding assembly to assume the first condition, if the information indicates that a vibration level of the component installed on a vehicle frame member and/or a load of a vehicle has been increased for a predetermined time.

In this way, it may reduce the risk of unnecessary adjustments when there is minor, short-term vibrations that are not critical.

Optionally in some examples, including in at least one preferred example, the method further comprises:
- controlling, by the processing circuitry, operations of the fluid guiding assembly to assume the first condition, when the information indicates that a vibration level of the component installed on a vehicle frame member and/or a load of a vehicle exceeds a vibration threshold level.

In this way, it may enable immediate response to high vibrations, despite the potential for more frequent adjustments.

Optionally in some examples, including in at least one preferred example, the method further comprises:
- controlling, by the processing circuitry, operations of the fluid guiding assembly to assume the third condition, if the information indicates the vibration level of the component installed on a vehicle frame member or the load of a vehicle is lower than a vibration threshold level.

According to a fourth aspect of the disclosure, a computer program product comprising program code is provided. The computer program is for performing, when executed by the processing circuitry, the method according to the third aspect of the disclosure.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic side view of a vehicle according to an example;
**FIG. 2** is a schematic view of a dynamic vibration absorber;
**FIG. 3** is a perspective view of a dynamic vibration absorber attached to a power pack assembly installed on a frame member;
**FIG. 4** is a perspective view of a gripping device;
**FIG. 5** is a schematic view of an elastic member provided with a fluid tank assembly and a fluid guiding assembly;
**FIG. 6** is a flow chart illustrating a method of operating a dynamic vibration absorber.
**FIG. 7** is a schematic diagram of an exemplary computer system for implementing methods disclosed herein.

### DETAILED DESCRIPTION

The detailed description set forth below provides information and examples of the disclosed technology with sufficient detail to enable those skilled in the art to practice the disclosure.

Vehicle vibrations arise from various sources such as engine operation, road irregularities, and mechanical imbalances, causing discomfort and potential damage to the vehicle. To mitigate these vibrations, various solutions have been employed. For instance, a shock absorber may absorb and damp shock impulses by converting kinetic energy of the shock into another form of energy. Moreover, a dynamic damper may be used to reduce the vibration. The dynamic damper may comprise a secondary mass member attached to a primary system via a spring mechanism. When the vehicle experiences these vibrations, the dynamic damper may be tuned to resonate at a frequency that counteracts a frequency of the vibrations, effectively neutralizing the vibrations and resulting in a smoother ride and prolonged vehicle component life. The present disclosure may seek to provide an improved dynamic vibration absorber, which may be easy to assemble and disassemble.

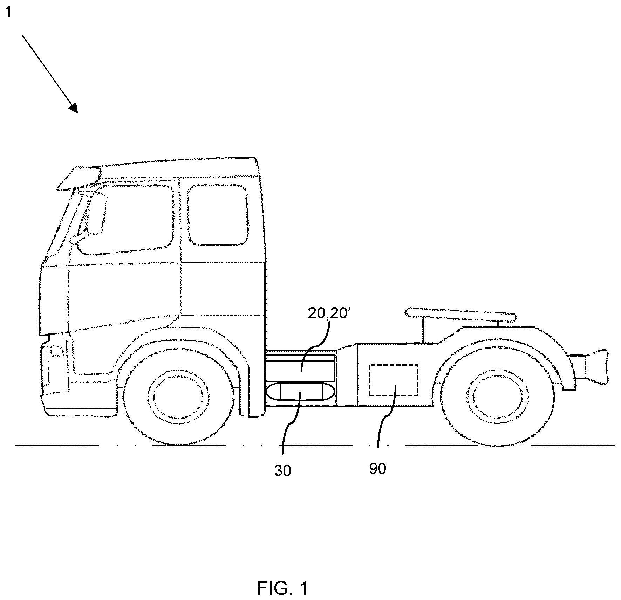

**Fig. 1** depicts a side view of a vehicle 1 according to an example. The vehicle 1 is here a truck, more specifically a heavy-duty truck for towing one or more trailers (not shown). Even though a heavy-duty truck 1 is shown it shall be noted that the disclosure is not limited to this type of vehicle but may be applicable for any other type of vehicle, such as a bus, construction equipment, e.g. a wheel loader or an excavator, and a passenger car.

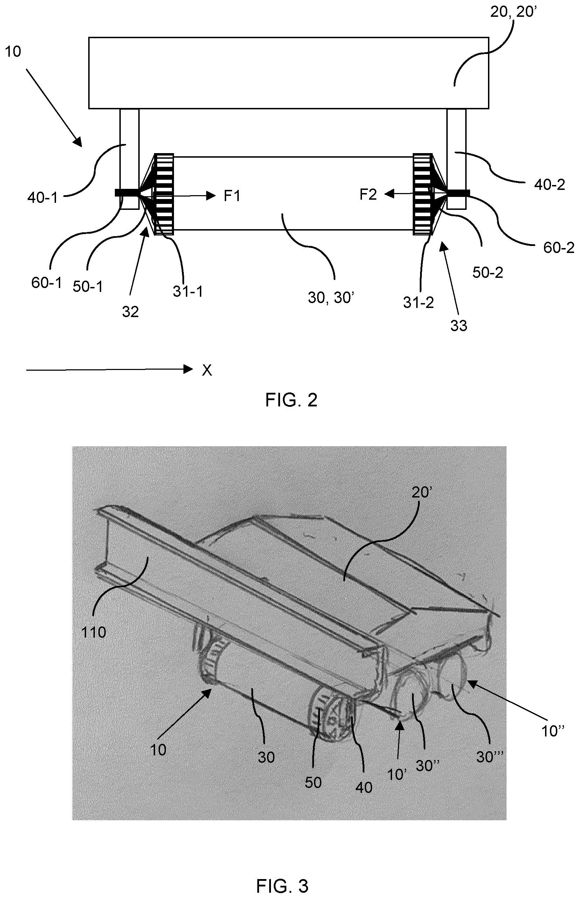

The vehicle 1 may be a battery-powered or a hybrid vehicle, utilizing one or more electric motors 90 to create a propulsion force to the vehicle 1. The vehicle 1 comprises an energy source that in turn comprises an electric energy source and a mechanical energy source. More specifically, the electric energy source may comprise a power pack assembly 20' that may have a plurality of traction batteries for providing electric power to the one or more electric motors 90. Additionally, the mechanical energy source comprises one or more air tank 30 for storing air or any suitable fluid used in vehicle's pneumatic systems. The power pack assembly 20' may be mounted on a vehicle frame member 110 (see FIG. 3), under which the one or more air tanks 30 are positioned. When the vehicle 1 is in motion, the energy source, such as the power pack assembly 20' may experience significant vibrations, particularly influenced by road conditions.

**FIG. 2** shows a schematic view of a dynamic vibration absorber 10, which may be used to reduce vibrations of a component 20, such as the FIG. 1 power pack assembly 20', installed on a vehicle frame member 110. The dynamic vibration absorber 10 comprises an air tank 30, such as the air tank depicted in FIG. 1, that may function as a secondary mass member in a damping system. The dynamic vibration absorber 10 further comprises an elastic member 40, and a gripping device 50 attached to the elastic member 40 and configured to grip the air tank 30. As such, the dynamic vibration absorber 10 may be seen as a mass-spring system, which may be attached to the power pack assembly 20' and adapted to resonate at a frequency that counteracts a frequency of the vibrations of the power pack assembly 20'.

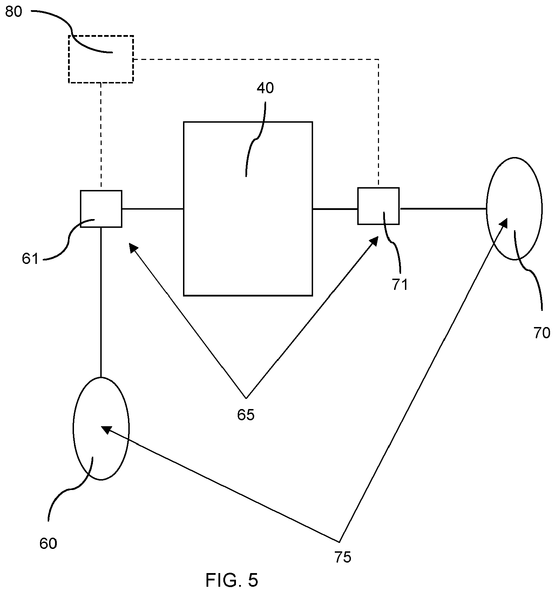

In the shown example, the air tank 30 comprises a body 30' extending between a first end 32 and a second end 33 along a first direction X. The elastic member 40 comprises a pair of springs, namely a first spring member 40-1, and a second spring member 40-2, that are positioned at the first end 32 and the second end 33, respectively. In some examples, the first and second spring members may be air springs, whereby the stiffness of the air springs 40-1, 40-2 may be adjusted by regulating the air pressure inside the air springs, allowing for precise control over tuning the resonance of the dynamic vibration absorber 20. Details of control of the air springs will be described along with **FIG. 5****.**

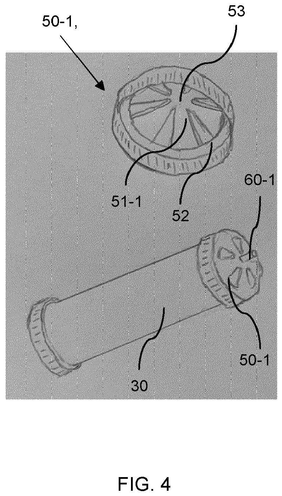

Moreover, the gripping device 50 comprises a first gripping member 50-1 and a second gripping member 50-2, configured to grip at least a portion of the first and second ends 32 33 of the air tank's body 30', respectively. More specifically, as shown in detail in **FIG.4****,** the first gripping member 50-1 has a first gripping space 51-1 to embrace at least a portion 31-1 of the air tank 30. The first gripping member 50-1 is configured such that when the at least portion 31-1 of the air tank 30 is fitted to the first gripping space 51-1, a first gripping force F1 is applied to the least portion 31-1 of air tank 30. In this way, the at least a portion of first side 32 may be securely gripped by the first gripping member 50-1. In some examples, the first gripping space 51-1 may have a surface 52 that faces the air tank 30 when the at least portion 31-1 of the air tank 30 is fitted to the first gripping space 51-1, and an adhesive, such as polyurethane, is disposed on at least part of the surface 52. The surface 52 may be comprised in a housing 53 of the first gripping member 50-1. The housing 53 may be made of any suitable materials, preferably a metal material, and more preferably an aluminum-based material.

Similarly, the second gripping member may have a second gripping space 51-2 to embrace at least a portion 31-2 of the second end 33 of the air tank 30 and being configured such that when the at least portion 31-2 of the second end 33 of the air tank 30 is fitted to the second gripping space 51-2, a second gripping force F2 is applied to the at least portion 31-2 of the second end 33.

Moreover, the gripping device 50, such as the first gripping member 50-1 and the second gripping member 50-2, may be attached to the elastic member 40, such as the first and the second spring members 40-1, 40-2, using at least a rod member 60-1, 60-2. The rod member may for example be a bolt member, or any suitable fixation member, which may be arranged to be inserted into corresponding receptacle on the elastic member 40.

It should be noted that, although the dynamic vibration absorber 10 in the shown example includes two spring members 40-1 and 40-2 and two gripping members 50-1 and 50-2, in some other examples, it may comprise a single spring member to connect to the air tank, or a single gripping member for gripping the air tank. The dynamic vibration absorber 10 may comprise any suitable number of spring member and/or gripping member, depending on different applications. Moreover, the example in FIG. 2 shows that the dynamic vibration absorber 10 is attached to the component 20 from underneath, thereby may reduce vertical vibrations affecting the component 20. In some other examples, the dynamic vibration absorber 10 may be attached to the component 20 from any directions, potentially reducing vibrations from different directions.

**FIG. 3** illustrates an example where a dynamic vibration absorber 10 is attached to a power pack assembly 20' installed on a frame member 110. Although not shown in details, the elastic member 40 of the dynamic vibration absorber 10 is attached to the underside of the power pack assembly 20', such as the floor of the assembly. In this way, the dynamic vibration absorber 10 is arranged to reduce vibrations, such as vertical vibrations, of the power pack assembly 20' during operation of the vehicle 1. In the shown example, the vehicle 1 comprises three air tanks 30, 30", 30‴, and each one of the air tanks 30, 31, 32 are used as a secondary mass member. These air tanks 30, 30", 30‴ are connected to an elastic member 40 to form three dynamic vibration absorbers 10, 10', 10'. In some other examples, only one or some of the air tanks 30, 30", 30‴ are used as a secondary mass member. In these examples, the air tanks 30‴ may be selected due to their position farthest from the frame member 110, which can effectively reduce vibrations.

**FIG. 5** is a schematic view of an elastic member provided with a fluid tank assembly 75 and a fluid guiding assembly 65. The fluid tank assembly 75 is fluidly connectable to the elastic member 40, e.g., the air springs 40-1, 40-2. The fluid guiding assembly 65 is adapted to assume each one of the following conditions:
- a first condition in which a fluid can flow from the fluid tank assembly 75 to the elastic member 40, such that a pressure level inside the elastic member 40 is increased,
- a second condition in which a fluid can flow from the elastic member 40 to the fluid tank assembly 75, such that a pressure level inside the elastic member 40 is decreased, and
- a third condition in which the fluid tank assembly 75 is fluidly disconnected from the elastic member 40.

As such, the stiffness of the air springs 40-1, 40-2 may be adjusted by regulating the air pressure inside the air springs 40-1, 40-2, which may allow for precise control over tuning the resonance of the dynamic vibration absorber 20.

In the shown examples, the fluid tank assembly 75 comprises a first tank 60, preferably a high pressure tank 60, and the fluid guiding assembly 65 comprises a first fluid controller 61, such as a valve assembly, for controlling a fluid connection between the first tank 60 and the elastic member 40. The first tank 60 is configured for supplying a fluid to the elastic member 40 when the fluid connection between the first tank 60 and the elastic member 40 is enabled. Moreover, the fluid tank assembly 75 further comprises an auxiliary tank 70 fluidly connectable to the elastic member 40. Additionally, the fluid guiding assembly 65 further comprises a second fluid controller 7, such as a valve assembly, for controlling a fluid connection between the auxiliary tank 70 and the elastic member 40. The auxiliary tank 70 is configured for receiving the fluid from the elastic member 40 when the fluid connection between the auxiliary tank 70 and the elastic member 40 is enabled. In some other examples, the fluid tank assembly 75 may comprise a single fluid tank provided with a fluid delivery line and a return line. The fluid tank may be selectively used to deliver a fluid to the elastic member 40 through the delivery line, for increasing a pressure level inside the elastic member 40, and/or to selectively to receive fluid from the air spring through the return line, for reducing a pressure level inside the elastic member 40.

Moreover, the vehicle 1 may further comprise a control unit 80, such as a computer system, that is adapted to receive information indicative of at least one of the following: a vibration level of the component 20 installed on a vehicle frame member 110, or a load of a vehicle 1. The control unit 80 is configured to control operations of the fluid guiding assembly 65 based on the received information. For instance, the control unit 80 may send a signal to the guiding assembly 65 indicating which one of the condition should be assumed. The information may be received wirelessly or via wire, from on-board sensors, such as an acceleration sensor or a load sensor. The information may alternatively be obtained from one or more intermediate units, e.g. memory units. Moreover, the information may be obtained upon request form the control unit 80, or may be obtained at regular or irregular time intervals without any prior request. Alternatively, the information may be continuously obtained whenever the vehicle on-board sensors have new/updated information to provide to the control unit 80. For example, one or more vibration sensors may continuously provide sensor data indicative of a vibration frequency of the component such that the control unit 80 may continuously adjust the air pressure in the at least one elastic member in response to the detected vibration frequency. One or more load sensors may be used in addition to or instead of vibration sensors, for example to derive a vibration frequency of the component. Accordingly, the control unit may increase, decrease, or maintain the air pressure in the elastic member 40 based on received vibration data of the component.

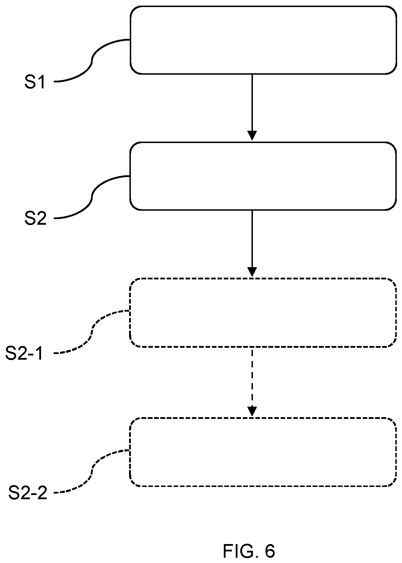

The present disclosure also relates to a method of operating a dynamic vibration absorber. **FIG. 6** illustrates the actions for performing the method. The method may be performed by processing circuitry of a control unit, such as the control unit 80 shown in **FIG. 5** or processing circuitry of a computer system and comprises at least one of the actions listed in the following, which, unless otherwise indicated, may be taken in any suitable order.

**S1:** receiving information indicative of at least one of the following: a vibration level of the component 20 installed on a vehicle frame member 110, or a load of the vehicle 1, and
**S2:** controlling operations of the fluid guiding assembly 65 based on the received information.

The information may be obtained from vehicle on-board sensors, such as an acceleration sensor or a load sensor.

Moreover, the method may further comprise the following optional actions:
S2-1: controlling operations of the fluid guiding assembly 65 to assume the first condition, if the information indicates that a vibration level of the component 20 installed on a vehicle frame member 110 and/or a load of a vehicle 1 has been increased for a predetermined time. This may reduce the risk of unnecessary adjustments when there are minor, short-term vibrations that are not critical.

Alternatively,
S2-2: controlling operations of the fluid guiding assembly 65 to assume the first condition, when the information indicates that a vibration level of the component 20 installed on a vehicle frame member 110 and/or a load of a vehicle exceeds a vibration threshold level. In this way, it may enable immediate response to high vibrations, despite the potential for more frequent adjustments.

The method may further comprise the following optional action:
S2-3: controlling, operations of the fluid guiding assembly 65 to assume the third condition, if the information indicates the vibration level of the component 20 installed on a vehicle frame member 110 or the load of a vehicle is lower than a vibration threshold level.

In some examples, the adjustment of the dynamic vibration absorber 10 may be based on additional data, such as map data indicating the road conditions of the upcoming drive path. In these cases, the stiffness of the air springs may be adjusted proactively, ensuring optimal performance and comfort by anticipating and preparing for varying road conditions.

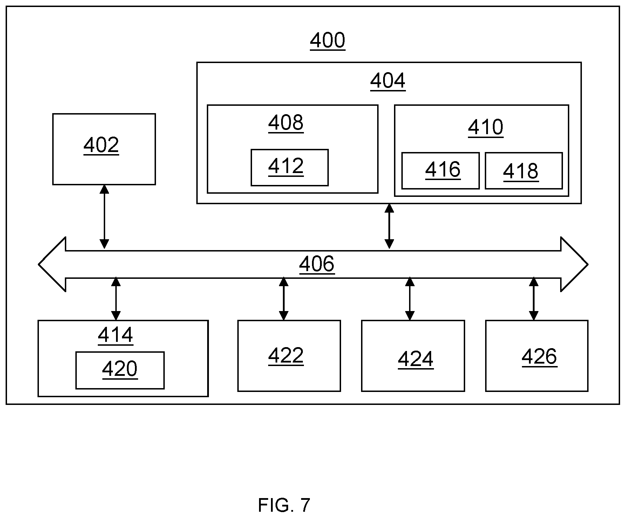

**FIG 7****.** illustrates a computer system 400, which may be seen as the control unit 80 for preforming the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets) of instructions to perform any one or more of the methodologies discussed herein. Accordingly, any reference in the disclosure and/or claims to a computer system, computing system, computer device, computing device, control system, control unit, electronic control unit ECU), processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN) bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP), an Application Specific Integrated Circuit ASIC), a Field Programmable Gate Array FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM), electrically erasable programmable read-only memory EEPROM), etc.), and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE) or serial advanced technology attachment SATA)), HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium) storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE) 1394 serial port, a Universal Serial Bus USB) port, an IR interface, and the like. The computer system **400** may include an output device interface **424** configured to forward output, such as to a display, a video display unit e.g., a liquid crystal display LCD) or a cathode ray tube CRT)). The computer system **400** may include a communications interface **426** suitable for communicating with a network as appropriate or desired.

Moreover, the present disclosure may be exemplified by any one of the below examples and combination of examples.

Example 1: A dynamic vibration absorber (10) for reducing vibrations of a component (20) installed on a vehicle frame member (110), comprising:
- an air tank (30),
- an elastic member (40) comprising a first spring member (40-1), and
- a gripping device (50) attached to the elastic member (40) and configured to grip the air tank (30),
- wherein the gripping device (50) comprises a first gripping member (50-1) having a first gripping space (51-1) to embrace at least a portion (31-1) of the air tank (30), the first gripping member (50-1) being configured such that when the at least portion (31-1) of the air tank (30) is fitted to the first gripping space (51-1), a first gripping force (F1) is applied to the least portion (31-1) of air tank (30)

Example 2: The dynamic vibration absorber (10) according to Example 1, wherein the first spring member (40-1) is an air spring.

Example 3: The dynamic vibration absorber (10) according to Examples 1-2, wherein the first gripping space (51-1) has a surface (52) that faces the air tank (30) when the at least portion (31-1) of the air tank (30) is fitted to the first gripping space (51-1), and wherein an adhesive is disposed on at least part of the surface (52).

Example 4: The dynamic vibration absorber (10) according to Example 3, wherein the adhesive is made of polyurethane.

Example 5: The dynamic vibration absorber (10) according to any one of Examples 1-4, wherein a housing (53) of the first gripping member (50-1) is made of a metal material.

Example 6: The dynamic vibration absorber (10) according to any one of Examples 1-5, wherein the air tank (30) comprises a body (30') extending between a first end (32) and a second end (33) along a first direction (X), wherein the first gripping member (50-1) is configured to grip at least a portion (31-1) of the first end (32) of the body (30') of the air tank (30).

Example 7: The dynamic vibration absorber (10) according to Example 6, wherein the elastic member (40) comprises a second spring member (40-2), wherein the gripping device (50) comprises a second gripping member (50-2) attached to the second spring member (40-2), the second gripping member (50-2) having a second gripping space (51-2) to embrace at least a portion (31-2) of the second end (33) of the air tank (30) and being configured such that when the at least portion (31-2) of the second end (33) of the air tank (30) is fitted to the second gripping space (51-2), a second gripping force (F2) is applied to the at least portion (31-2) of the second end (33).

Example 8: The dynamic vibration absorber (10) according to any one of the preceding Examples, wherein the gripping device (50) is attached to the elastic member (40) using at least a rod member (60-1, 60-2).

Example 9: A vehicle (1) comprising a power pack assembly (20') installed on a vehicle frame member (110), and the dynamic vibration absorber (10) according to any one of Examples 1-8, the dynamic vibration absorber (10) being arranged to reduce vibrations of the power pack assembly (20').

Example 10: The vehicle (1) according to Example 9, wherein the elastic member (40) of the dynamic vibration absorber (10) is attached to the power pack assembly (20').

Example 11: The vehicle (1) according to any one of Examples 9-10, further comprising a fluid tank assembly (75) fluidly connectable to the elastic member (40), and a fluid guiding assembly (65) adapted to assume each one of the following conditions:
- a first condition in which a fluid can flow from the fluid tank assembly (75) to the elastic member (40), such that a pressure level inside the elastic member (40) is increased,
- a second condition in which a fluid can flow from the elastic member (40) to the fluid tank assembly (75), such that a pressure level inside the elastic member (40) is decreased, and
- a third condition in which the fluid tank assembly (75) is fluidly disconnected from the elastic member (40).

Example 12: The vehicle according to Example 11, further comprising a control unit (80) adapted to receive information indicative of at least one of the following:
- a vibration level of the component (20) installed on a vehicle frame member (110), or a load of a vehicle (1).
- wherein the control unit (80) is configured to control operations of the fluid guiding assembly (65) based on the received information.

Example 13: The vehicle (1) according to any one of Examples 11-12, wherein the fluid tank assembly (75) comprises a first tank (60), preferably a high pressure tank (60), and wherein the fluid guiding assembly (65) comprises a first fluid controller (61) for controlling a fluid connection between the first tank (60) and the elastic member (40), wherein the first tank (60) is configured for supplying a fluid to the elastic member (40) when the fluid connection between the first tank (60) and the elastic member (40) is enabled.

Example 14: The vehicle (1) according to any one of Examples 11-13, wherein the fluid tank assembly (75) further comprises an auxiliary tank (70) fluidly connectable to the elastic member (40), and wherein the fluid guiding assembly (65) further comprises a second fluid controller (71) for controlling a fluid connection between the auxiliary tank (70) and the elastic member (40), wherein the auxiliary tank (70) is configured for receiving the fluid from the elastic member (40) when the fluid connection between the auxiliary tank (70) and the elastic member (40) is enabled.

Example 15: A computer-implemented method for controlling a dynamic vibration absorber (10) for reducing vibrations of a component (20) installed on a vehicle frame member (110), the dynamic vibration absorber comprising:
- an air tank (30),
- an elastic member (40) comprising a first spring member (40-1) being an air spring, and
- a gripping device (50) attached to the elastic member (40) and configured to grip the air tank (30),
- wherein the gripping device (50) comprises a first gripping member (50-1) having a first gripping space (51-1) to embrace at least a portion (31-1) of the air tank (30), the first gripping member (50-1) being configured such that when the at least portion (31-1) of the air tank (30) is fitted to the first gripping space (51-1), a first gripping force (F1) is applied to the least portion (31-1) of air tank (30),
wherein the dynamic vibration absorber (10) is provided with:
- a fluid tank assembly (75) fluidly connectable to the elastic member (40), and
- a fluid guiding assembly (65) adapted to assume each one of the following conditions:
- a first condition in which a fluid can flow from the fluid tank assembly (75) to the elastic member (40), such that a pressure level inside the elastic member (40) is increased,
- a second condition in which a fluid can flow from the elastic member (40) to the fluid tank assembly (75), such that a pressure level inside the elastic member (40) is decreased, and
- a third condition in which the fluid tank assembly (75) is fluidly disconnected to the elastic member (40).
the method comprising:
- receiving (S 1), by processing circuitry of a computer system (400), information indicative of at least one of the following: a vibration level of the component (20) installed on a vehicle frame member (110), or a load of the vehicle (1), and
- controlling (S2), by the processing circuitry, operations of the fluid guiding assembly (65) based on the received information.

Example 16: The method according to Example 15, further comprising:
- controlling (S2-1), by the processing circuitry, operations of the fluid guiding assembly (65) to assume the first condition, if the information indicates that a vibration level of the component (20) installed on a vehicle frame member (110) and/or a load of a vehicle (1) has been increased for a predetermined time.

Example 17: The method according to Example 15, further comprising:
- controlling (S2-2), by the processing circuitry, operations of the fluid guiding assembly (65) to assume the first condition, when the information indicates that a vibration level of the component (20) installed on a vehicle frame member (110) and/or a load of a vehicle exceeds a vibration threshold level.

Example 18: The method according to Example 16-17, further comprising:
- controlling (S2-3), by the processing circuitry, operations of the fluid guiding assembly (65) to assume the third condition, if the information indicates the vibration level of the component (20) installed on a vehicle frame member (110) or the load of a vehicle is lower than a vibration threshold level.

Example 19: A computer program product comprising program code for performing, when executed by the processing circuitry, the method of any of Examples 15-17.

Example 20: A non-transitory computer-readable storage medium comprising instructions, which when executed by the processing circuitry, cause the processing circuitry to perform the method of any of Examples 15-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A dynamic vibration absorber (10) for reducing vibrations of a component (20) installed on a vehicle frame member (110), comprising:
- an air tank (30),
- an elastic member (40) comprising a first spring member (40-1), and
- a gripping device (50) attached to the elastic member (40) and configured to grip the air tank (30),
- wherein the gripping device (50) comprises a first gripping member (50-1) having a first gripping space (51-1) to embrace at least a portion (31-1) of the air tank (30), the first gripping member (50-1) being configured such that when the at least portion (31-1) of the air tank (30) is fitted to the first gripping space (51-1), a first gripping force (F1) is applied to the least portion (31-1) of air tank (30)

2. The dynamic vibration absorber (10) according to claim 1, wherein the first spring member (40-1) is an air spring.

3. The dynamic vibration absorber (10) according to claims 1-2, wherein the first gripping space (51-1) has a surface (52) that faces the air tank (30) when the at least portion (31-1) of the air tank (30) is fitted to the first gripping space (51-1), and wherein an adhesive is disposed on at least part of the surface (52).

4. The dynamic vibration absorber (10) according to claim 3, wherein the adhesive is made of polyurethane.

5. The dynamic vibration absorber (10) according to any one of claims 1-4, wherein a housing (53) of the first gripping member (50-1) is made of a metal material.

6. The dynamic vibration absorber (10) according to any one of claims 1-5, wherein the air tank (30) comprises a body (30') extending between a first end (32) and a second end (33) along a first direction (X), wherein the first gripping member (50-1) is configured to grip at least a portion (31-1) of the first end (32) of the body (30') of the air tank (30).

7. The dynamic vibration absorber (10) according to claim 6, wherein the elastic member (40) comprises a second spring member (40-2), wherein the gripping device (50) comprises a second gripping member (50-2) attached to the second spring member (40-2), the second gripping member (50-2) having a second gripping space (51-2) to embrace at least a portion (31-2) of the second end (33) of the air tank (30) and being configured such that when the at least portion (31-2) of the second end (33) of the air tank (30) is fitted to the second gripping space (51-2), a second gripping force (F2) is applied to the at least portion (31-2) of the second end (33).

8. A vehicle (1) comprising a power pack assembly (20') installed on a vehicle frame member (110), and the dynamic vibration absorber (10) according to any one of claims 1-7, the dynamic vibration absorber (10) being arranged to reduce vibrations of the power pack assembly (20').

9. The vehicle (1) according claim 8, further comprising a fluid tank assembly (75) fluidly connectable to the elastic member (40), and a fluid guiding assembly (65) adapted to assume each one of the following conditions:
- a first condition in which a fluid can flow from the fluid tank assembly (75) to the elastic member (40), such that a pressure level inside the elastic member (40) is increased,
- a second condition in which a fluid can flow from the elastic member (40) to the fluid tank assembly (75), such that a pressure level inside the elastic member (40) is decreased, and
- a third condition in which the fluid tank assembly (75) is fluidly disconnected from the elastic member (40).

10. The vehicle according to claim 9, further comprising a control unit (80) adapted to receive information indicative of at least one of the following:
- a vibration level of the component (20) installed on a vehicle frame member (110), or a load of a vehicle (1).
- wherein the control unit (80) is configured to control operations of the fluid guiding assembly (65) based on the received information.

11. The vehicle (1) according to any one of claims 9-10, wherein the fluid tank assembly (75) comprises a first tank (60), preferably a high pressure tank (60), and wherein the fluid guiding assembly (65) comprises a first fluid controller (61) for controlling a fluid connection between the first tank (60) and the elastic member (40), wherein the first tank (60) is configured for supplying a fluid to the elastic member (40) when the fluid connection between the first tank (60) and the elastic member (40) is enabled.

12. The vehicle (1) according to any one of claims 9-11, wherein the fluid tank assembly (75) further comprises an auxiliary tank (70) fluidly connectable to the elastic member (40), and wherein the fluid guiding assembly (65) further comprises a second fluid controller (71) for controlling a fluid connection between the auxiliary tank (70) and the elastic member (40), wherein the auxiliary tank (70) is configured for receiving the fluid from the elastic member (40) when the fluid connection between the auxiliary tank (70) and the elastic member (40) is enabled.

13. A computer-implemented method for controlling a dynamic vibration absorber (10) for reducing vibrations of a component (20) installed on a vehicle frame member (110), the dynamic vibration absorber comprising:
- an air tank (30),
- an elastic member (40) comprising a first spring member (40-1) being an air spring, and
- a gripping device (50) attached to the elastic member (40) and configured to grip the air tank (30),
- wherein the gripping device (50) comprises a first gripping member (50-1) having a first gripping space (51-1) to embrace at least a portion (31-1) of the air tank (30), the first gripping member (50-1) being configured such that when the at least portion (31-1) of the air tank (30) is fitted to the first gripping space (51-1), a first gripping force (F1) is applied to the least portion (31-1) of air tank (30),
wherein the dynamic vibration absorber (10) is provided with:
- a fluid tank assembly (75) fluidly connectable to the elastic member (40), and
- a fluid guiding assembly (65) adapted to assume each one of the following conditions:
- a first condition in which a fluid can flow from the fluid tank assembly (75) to the elastic member (40), such that a pressure level inside the elastic member (40) is increased,
- a second condition in which a fluid can flow from the elastic member (40) to the fluid tank assembly (75), such that a pressure level inside the elastic member (40) is decreased, and
- a third condition in which the fluid tank assembly (75) is fluidly disconnected to the elastic member (40).
the method comprising:
- receiving (S 1), by processing circuitry of a computer system (400), information indicative of at least one of the following: a vibration level of the component (20) installed on a vehicle frame member (110), or a load of the vehicle (1), and
- controlling (S2), by the processing circuitry, operations of the fluid guiding assembly (65) based on the received information.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of any of claim 13.
